# EUROPEAN PATENT SPECIFICATION

(11) **EP 4 261 611 B1**
(45) Date of publication and mention of the grant of the patent: **06.08.2025**
(21) Application number: 22167676.0
(22) Date of filing: 11.04.2022
(51) Int. Cl.: G03B 15/05, G03B 17/02, G03B 30/00, G03B 11/00, B60Q 1/00, F21S 41/00, B60Q 3/68, B60Q 3/70

(54) **COVER FOR AN ILLUMINATING AND IMAGING SYSTEM AND ASSOCIATED ILLUMINATING AND IMAGING SYSTEM**
ABDECKUNG FÜR EIN BELEUCHTUNGS- UND ABBILDUNGSSYSTEM UND ZUGEHÖRIGES BELEUCHTUNGS- UND ABBILDUNGSSYSTEM
COUVERCLE POUR UN SYSTÈME D'ÉCLAIRAGE ET D'IMAGERIE ET SYSTÈME D'ÉCLAIRAGE ET D'IMAGERIE ASSOCIÉ

(43) Date of publication of application: 18.10.2023
(73) Proprietor: Valeo Comfort and Driving Assistance, 94000 Créteil (FR)
(72) Inventor: BEAUDOIN, Sylvain, 94000 Créteil (FR); BUENO, Jean Luc, 94000 Créteil (FR); KONOPISKY, Jan, 94000 Créteil (FR); HAEBLER, Peter, 94000 Créteil (FR); KREIBICH, Sandra, 94000 Créteil (FR); CHION, Guillaume, 94000 Créteil (FR); BOLE, Samuel, 94000 Créteil (FR); YEPREMIAN, Hayk, 94000 Créteil (FR); ZANGIACOMI, Stefano, 94000 Créteil (FR)
(74) Representative: Delplanque, Arnaud

(56) References cited:
- US-A1- 2004 160 786
- US-A1- 2012 092 549
- US-A1- 2018 343 402
- US-A1- 2019 257 922
- US-A1- 2019 285 968

## Description

### TECHNICAL FIELD OF THE INVENTION

The invention relates to the field of imaging.

More precisely the invention relates to a cover for an illuminating and imaging system.

### BACKGROUND INFORMATION AND PRIOR ART

Interior cameras are used in the automotive industry to monitor the interior of the cabin. An interior camera typically comprises an RGB-IR image capture apparatus working both in the visible domain and in the infrared domain. Colors images are for example used for videoconferences or face recognition of the driver whereas infrared images are used for driver motoring. In order to acquire infrared images, the interior camera also comprises an infrared light source adapted to illuminate the interior of the cabin. For aesthetic reasons and for their protection, the image capture apparatus and the infrared light source are placed behind a window extending in front of them.

Unfortunately, the window acts as a light guide between the infrared light source and the image capture apparatus. A portion of the light emitted by the infrared light source is guided to the image capture apparatus which causes glare on the acquired images, especially on the infrared images. This portion is even more significant since the light source usually emits light at wide angles in order to illuminate the whole cabin.

US 2012/092549 A1 discloses a camera with IR illumination and a separator between the illumination source and the image sensor as well as an IR blocking coating on parts of the front window.

### SUMMARY OF THE INVENTION

In this context, one object of the invention is to provide an illuminating and imaging system according to appended claim 1.

Thanks to the cover according to the invention, when propagating in the window towards the image capture apparatus, infrared light reflects on the interface between the window and the layer (at the front surface) and part of this infrared light is absorbed at each reflection. The quantity of infrared light reaching the image capture apparatus is therefore greatly reduced thanks to the layer. Glare is therefore prevented.

In a particular embodiment, the separator is also adapted to absorb infrared light. Infrared light is therefore absorbed when it reflects on both the front and back surfaces of the window, in the vicinity of the separator.

Other advantageous and non-limiting features of the method according to the invention are:
- said layer has an absorption greater than 90% in a wavelength range from 700 nm to 2000 nm;
- said layer extends such as to face at least 50% of a surface of the separator which is in contact with the window;
- said layer has a thickness comprised between 15 µm and 1200 µm;
- said layer extends such that any ray of light emitted by the infrared light source and guided by the window to the image capture apparatus reflects at least once on an interface between the window and the layer;
- the cover further comprises an infrared coating adapted to absorb visible light and to transmit infrared light, the infrared coating extending in front of the front surface of the window in such manner as to face the infrared light source;
- the cover further comprises a transparent film facing the front face of the window;
- the separator has a dimension along a direction from the infrared light source to the image capture apparatus, said dimension of the separator being greater than a thickness of the window;
- the separator and the window are obtainable by a multi-material injection molding process.

The invention relates to an illuminating and imaging system adapted to be placed inside an automotive vehicle and comprising:
- a cover according as above-described;
- said infrared light source;
- said image capture apparatus.

### DETAILED DESCRIPTION OF EXAMPLE(S)

The following description, enriched with joint drawings that should be taken as non-limitative examples, will help understand the invention and figure out how it can be realized.

In the accompanying drawings:
- Figure 1 is a schematic sectional view of the cover according to the invention in a working position with respect to an illuminating and imaging system;
- Figure 2 is a schematic exploded view of the cover of figure 1.

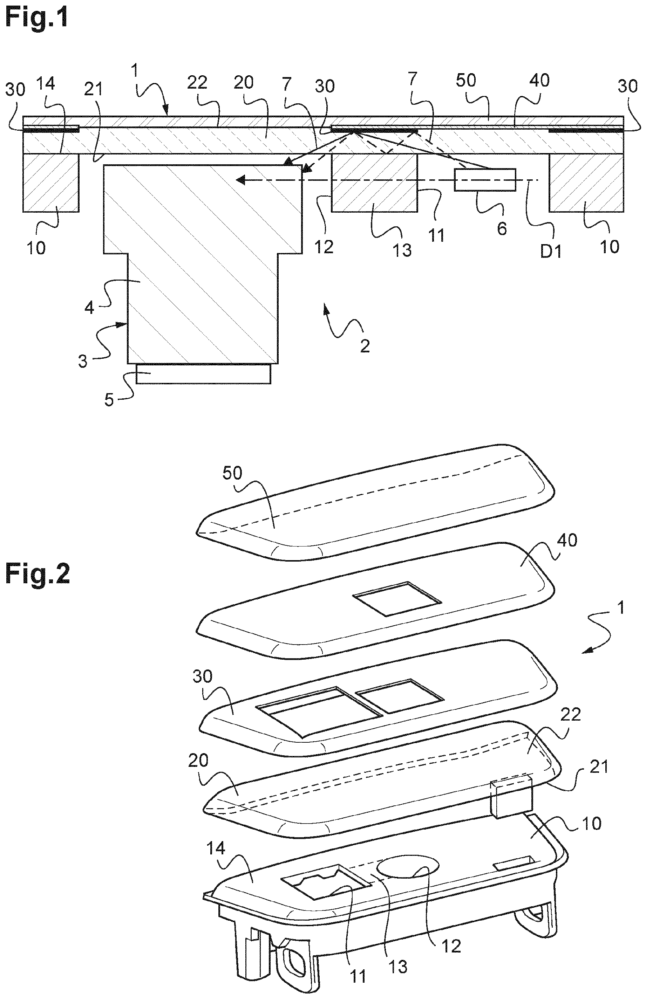

A cover 1 according to the invention is represented in figures 1 and 2.

As shown in figure 1, the cover 1 is designed to be used in combination with an illuminating and imaging system 2. In the context of this disclosure, the illuminating and imaging system 2 is an interior camera for an automotive vehicle. The illuminating and imaging system 2 comprises an image capture apparatus 3 adapted to acquire images of a scene, which is here the cabin of the automotive vehicle, and an infrared light source 6 adapted to illuminate said scene with infrared light. The image capture apparatus 3 comprises a lens 4 and RGB-IR sensor 5 (for "Red-Green-Blue-Infrared") composed of color pixels and of infrared pixels. The image capture apparatus 3 is therefore adapted to acquire both color images and infrared images.

The cover 1 aims at protecting the illuminating and imaging system 2 and also at hiding parts of the illuminating and imaging system 2 for passengers of the vehicle. In the following, the cover 1 is described as installed with respect to the illuminating and imaging system 2, that is to say in front of the illuminating and imaging system 2.

As shown in figure 2, the cover 1 comprises a frame 10 which is a support element adapted to be fixed around the illuminating and imaging system 2, for example to the roof of the cabin. The frame 10 is for example made of polycarbonate, polymethylmethacrylate or polyamide.

The frame 10 delimits a first opening 11 and a second opening 12. As shown in figure 1, the first opening 11 is positioned in front of the light source 6 to allow infrared light to propagate to the scene. The second opening 12 is positioned in front of the image capture apparatus 3 to allow images of the scene to be acquired.

Between the first opening 11 and the second opening 12, the frame 10 comprises a separator 13. The separator 13 is interposed between the image capture apparatus 3 and the light source 6, as shown in figure 1. Classically, the separator 13 prevents direct illumination of the image capture apparatus 3 by the light source 6 in the sense that no ray of infrared light, emitted by the light source 6, can reach the image capture apparatus 3 without being reflected. The separator 13 is formed here in a single piece with the whole frame 10. In other words, the separator 13 is here a portion of the frame 10 which is characterized in being located between the image capture apparatus 3 and the light source 6.

As shown in figure 2, on top of the frame 10 (in the direction of the scene, i.e. of the cabin), the cover 1 comprises a window 20. The window 20 extends in front of the image capture apparatus 3 and the light source 6. Here, the window 20 extends in particular so as to cover the first opening 11 and the second opening 12. The window 20 is here a plain plate in the sense that it comprises no holes or openings.

The window 20 is made of a transparent material which transmits both visible light and infrared light. The window 20 for instance has a transmission greater than 89%, and preferentially greater than 99%, in wavelength ranges comprised between 400 nm and 700 nm (visible light) and in wavelength ranges comprised between 700 nm and 2000 nm (infrared light).

As shown in figure 1, the window 20 may be substantially plane. Here, the window 20 more specifically fits an external surface 14 of the frame 10 as illustrated in figure 2. In this way, the window 20 is supported by the frame 10. In any case, the window 20 has a back surface 21 which is in contact with the frame 10 and a front surface 22 opposite to the back surface 21 and oriented toward the scene. Here, the back surface 21 and front surface 22 are substantially parallel and distant of a thickness comprised between 1 mm and 3 mm. The back surface 21 is more specifically in contact with the external surface 14 of the frame 10 and with the separator 13.

As shown in figure 2, on top of the window 20 (in the direction of the scene), the cover 1 comprises a layer 30 adapted to absorb infrared light. The layer 30 is, in particular, adapted to absorb the light emitted by the light source 6. The absorption of the layer 30 may depend on the emission spectrum of the light source 6. In a general manner, the layer 30 for example has an absorption greater than 90% in a wavelength range comprised between 700 nm and 2000 nm. To this end, the layer 30 may be made of a black ink, paint, or plastic material, such as polycarbonate.

The layer 30 lies on the front surface 22 of the window 20 opposite to the separator 13. In other words, the layer 30 extends in contact with the front surface 22. Preferentially, the layer 30 faces at least 50% of a surface of the separator 13 which is in contact with the window 20. More preferentially, the layer 30 faces all the surface of the separator 13 which is in contact with the window 20, as represented in figure 1.

The layer 30 has for example a thickness, here in a direction substantially perpendicular the front surface 22, comprised between 15 µm and 1200 µm. Preferentially, the layer 30 has a thickness comprised between 15 µm and 100 µm when it is made of ink. Preferentially, the layer 30 has a thickness comprised between 600 µm and 1200 µm when it is made of plastic.

Here, as represented in figure 2, the layer 30 extends on a vast majority the front surface 22. Here, the layer 30 faces at least 70% of the external surface 14 of the frame 10. However, the layer 30 does not extend in front of the first opening 11 and the second opening 12. In this way, the cabin can be correctly illuminated, and infrared images can be acquired.

Thanks to the layer 30, infrared light beams 7 emitted by the light source 6 and propagating in the window 20 towards the image capture apparatus 3 are at least partly, if not totally, absorbed. Indeed, as illustrated in figure 1, these beams 7 reflect on the interface between the window 20 and the layer 30. At each reflection, these beams 7 are partially transmitted to the layer 30 and absorbed by the latest. The intensity of infrared light reaching the image capture apparatus 3 is therefore far lower as compared with a cover that would not include an infrared absorbing layer.

Preferentially, the layer 30 extends such that any ray of light emitted by the infrared light source 6 and guided by the window 20 to the image capture apparatus 3 reflects at least once on the interface between the window 20 and the layer 30. This ensure that any ray of infrared light is absorbed by the layer 30 at least once.

Here, the separator 13, and more generally the frame 10, is also adapted to absorb infrared light. The frame 10 is for example made of black polycarbonate. Attenuation of the infrared light beam 7 therefore happens at the interfaces of the window 20 with both the layer 30 and the separator 13.

In a remarkable way, the dimensions of the separator 13, and therefore those of the layer 30, are selected such that the infrared light beams 7 reflect multiple times at the interfaces of the window 20 with the layer 30 and the separator 13 before reaching the image capture apparatus 3 (as illustrated by the dotted arrow). To this end, the thickness of the window 20 is smaller than a width of the separator 13. The width of the separator 13 is here defined as its dimension along a direction D1 from the infrared light source 6 to the image capture apparatus 3. For instance, the thickness of the window 20 is comprised between 1 mm and 1,2 mm and the width of the separator 13 is comprised between 3 mm and 5 mm.

As shown in figure 2, the layer 30 fits the shape of the front surface 22 of the window 20.

As shown in figure 2, on top of the layer 30 (in the direction of the scene), the cover 1 comprises an infrared coating 40. The infrared coating 40 is adapted to absorb visible light and to transmit infrared light. For instance, the infrared coating 40 has a transmission greater than 95% in wavelength ranges comprised between 700 nm and 2000 nm (infrared light) and a transmission lower than 5% in wavelength ranges comprised between 400 nm and 700 nm (visible light). The infrared coating 40 is for example made of ink, paint, or plastic material such as polycarbonate, polymethylmethacrylate or polyamide.

The infrared coating 40 extends on the layer 30 at the opposite side from the window 20. The infrared coating 40 extends similarly to the layer 30. However, the infrared coating 40 also specifically extends in front of the first opening 11. Consequently, the infrared coating 40 prevents the light source 6 from being seen from the cabin.

As shown in figure 2, on top of the infrared coating 40 (in the direction of the scene), the cover 1 comprises a transparent film 50. The transparent film 50 is here made of a transparent polycarbonate. The transparent film 50 protects the other elements of the cover 1 and, in particular, the infrared coating 40 and the layer 30, for example against scratches. The transparent film 50 also ensures that the external surface of the cover 1 is smooth. In other words, the transparent film 50 also has an aesthetic purpose. Here, the transparent film 50 is thinner than the window 20.

Optionality, the cover 1 may also comprises several materials (not represented) coated on the transparent film 50 such as anti-starch or anti-reflection varnishes or varnishes to protect against ultraviolet light.

The cover 1 according to the invention is here fabricated thanks to a multi-material injection molding process.

In a first step, the transparent film 50 is molded.

In a second step, the layer 30 and the infrared coating 40 are successively deposited onto the transparent film 50. Here, the layer 30 and the infrared coating 40 are each preferentially made of an ink which is deposited by a film insert molding process. This means that the layer 30 and the infrared coating are formed directly on the transparent film 50. As a variant, the layer and the infrared coating could be coated.

Then, in a third step the window 20 and the frame 10 are successively overmolded onto the assembly made of the transparent film 50, the infrared coating 40 and the layer 30. Firstly, said assembly is overmolded with the window 20, which means that the window 20 is injected under high pressure onto said assembly. Secondly, the new assembly made of the transparent film 50, the infrared coating 40 and the layer 30 and the window 20 is overmolded with the frame 10, which means that the frame 10 is injected under high pressure onto said new assembly. The frame 10 and the window 20 are therefore molded in contact with each other.

Thanks to this multi-material injection molding process, the frame 10 and the window 20 are chemically bonded to each other, which results in a very efficient optical interface. In consequence of this efficient optical interface, infrared light propagating in the window 20 is efficiently transmitted to the frame 10, in particular to the separator 13, when reflecting on the back surface 21. The optical interface is even more efficient than, here, the frame 10 and the window 20 are made of similar materials: polycarbonates only distinct in colors.

Efficient optical interfaces are also produced between the window 20, the layer 30, the infrared coating 40 and the transparent film 50, thus, the transmission of infrared light between them is improved.

As a variant and as a comparison, the frame and the window could be molded separately and fixed together. The interface between the frame and the window would then comprise air or glue which reduces the quantity of infrared light transmitted from the window to the frame as compared with the above-described efficient optical interface.

In a fourth step, coating materials may be deposited onto the transparent film 50 to give it optical or mechanical properties.

## Claims

1. Illuminating and imaging system (2) comprising:
- an infrared light source (6);
- an image capture apparatus (3); and
- a cover (1) comprising:
- a window (20) designed to extend over the infrared light source (6) and the image capture apparatus (3); and
- a separator (13),
the window (20) comprising a back surface (21) in contact with the separator (13) and a front surface (22) opposite to the back surface (21), the separator (13) being positioned with respect to the window (20) in such manner as to be interposed between the light source (6) and the image capture apparatus (3) to prevent direct illumination of the image capture apparatus (3) by the light source (6),
said cover (1) comprises a layer (30) adapted to absorb infrared light, the layer (30) extending on the front surface (22) of the window (20) such as to face at least partly the separator (13), **characterized in that**
- said illuminating and imaging system is adapted to be placed inside an automotive vehicle; and
- said cover (1) further comprises an infrared coating (40) adapted to absorb visible light and to transmit infrared light, the infrared coating (40) extending in front of the front surface (22) of the window (20) in such manner as to face the infrared light source (6).

2. Illuminating and imaging system (2) according to claim 1, wherein said layer (30) has an absorption greater than 90% in a wavelength range from 700 nm to 2000 nm.

3. Illuminating and imaging system (2) according to claim 1 or 2, wherein said layer (30) extends such as to face at least 50% of a surface of the separator (13) which is in contact with the window (20).

4. Illuminating and imaging system (2) according to anyone of claims 1 to 3, wherein said layer (30) has a thickness comprised between 15 µm and 1200 µm.

5. Illuminating and imaging system (2) according to anyone of claims 1 to 4, wherein said layer (30) extends such that any ray of light emitted by the infrared light source (6) and guided by the window (20) to the image capture apparatus (3) reflects at least once on an interface between the window (20) and the layer (30).

6. Illuminating and imaging system (2) according to anyone of claims 1 to 5, further comprising a transparent film facing the front face of the window (20).

7. Illuminating and imaging system (2) according to anyone of claims 1 to 6, wherein the separator (13) has a dimension along a direction from the infrared light source (6) to the image capture apparatus (3), said dimension of the separator (13) being greater than a thickness of the window (20).

8. Illuminating and imaging system (2) according to anyone of claims 1 to 6, wherein the separator (13) and the window (20) are obtainable by a multi-material injection molding process.

## Patentansprüche

1. Beleuchtungs- und Abbildungssystem (2) mit:
- eine Infrarot-Lichtquelle (6);
- eine Bilderfassungsvorrichtung (3) und
- eine Abdeckung (1) mit:
- ein Fenster (20), das so gestaltet ist, dass es sich über die Infrarotlichtquelle (6) und die Bilderfassungsvorrichtung (3) erstreckt; und
- einen Separator (13),
wobei das Fenster (20) eine hintere Fläche (21) in Kontakt mit dem Separator (13) und eine vordere Fläche (22) gegenüber der hinteren Fläche (21) aufweist, wobei der Separator (13) in Bezug auf das Fenster (20) so positioniert ist, dass er zwischen der Lichtquelle (6) und der Bilderfassungsvorrichtung (3) angeordnet ist, um eine direkte Beleuchtung der Bilderfassungsvorrichtung (3) durch die Lichtquelle (6) zu verhindern,
die Abdeckung (1) eine Schicht (30) umfasst, die geeignet ist, Infrarotlicht zu absorbieren, wobei sich die Schicht (30) auf der Vorderseite (22) des Fensters (20) derart erstreckt, dass sie zumindest teilweise dem Separator (13) gegenüberliegt, **dadurch gekennzeichnet, dass**
- das Beleuchtungs- und Abbildungssystem dazu geeignet ist, im Inneren eines Kraftfahrzeugs angeordnet zu werden; und
- die Abdeckung (1) außerdem eine Infrarotbeschichtung (40) umfasst, die geeignet ist, sichtbares Licht zu absorbieren und Infrarotlicht durchzulassen, wobei sich die Infrarotbeschichtung (40) vor der Vorderfläche (22) des Fensters (20) so erstreckt, dass sie der Infrarotlichtquelle (6) zugewandt ist.

2. Beleuchtungs- und Abbildungssystem (2) nach Anspruch 1, wobei die Schicht (30) eine Absorption von mehr als 90% in einem Wellenlängenbereich von 700 nm bis 2000 nm aufweist.

3. Beleuchtungs- und Abbildungssystem (2) nach Anspruch 1 oder 2, wobei sich die Schicht (30) so erstreckt, dass sie mindestens 50 % einer Oberfläche des Separators (13) bedeckt, die mit dem Fenster (20) in Kontakt ist.

4. Beleuchtungs- und Abbildungssystem (2) nach einem der Ansprüche 1 bis 3, wobei die Schicht (30) eine Dicke zwischen 15 µm und 1200 µm aufweist.

5. Beleuchtungs- und Abbildungssystem (2) nach einem der Ansprüche 1 bis 4, wobei sich die Schicht (30) so erstreckt, dass jeder von der Infrarot-Lichtquelle (6) emittierte und durch das Fenster (20) zur Bilderfassungsvorrichtung (3) geführte Lichtstrahl mindestens einmal an einer Grenzfläche zwischen dem Fenster (20) und der Schicht (30) reflektiert wird.

6. Beleuchtungs- und Abbildungssystem (2) nach einem der Ansprüche 1 bis 5, ferner mit einer transparenten Folie, die der Vorderseite des Fensters (20) zugewandt ist.

7. Beleuchtungs- und Abbildungssystem (2) nach einem der Ansprüche 1 bis 6, wobei das Trennelement (13) eine Abmessung entlang einer Richtung von der Infrarotlichtquelle (6) zu der Bilderfassungsvorrichtung (3) aufweist, wobei die Abmessung des Trennelements (13) größer als eine Dicke des Fensters (20) ist.

8. Beleuchtungs- und Abbildungssystem (2) nach einem der Ansprüche 1 bis 6, wobei der Separator (13) und das Fenster (20) durch ein Mehrstoff-Spritzgießverfahren erhältlich sind.

## Revendications

1. Système d'éclairage et d'imagerie (2) comprenant :
- une source de lumière infrarouge (6) ;
- un appareil de capture d'images (3) ; et
- un couvercle (1) comprenant
- une fenêtre (20) conçue pour s'étendre sur la source de lumière infrarouge (6) et l'appareil de capture d'images (3) ; et
- un séparateur (13),
la fenêtre (20) comprend une surface arrière (21) en contact avec le séparateur (13) et une surface avant (22) opposée à la surface arrière (21), le séparateur (13) étant positionné par rapport à la fenêtre (20) de manière à être interposé entre la source de lumière (6) et l'appareil de capture d'images (3) pour empêcher l'illumination directe de l'appareil de capture d'images (3) par la source de lumière (6), ledit couvercle (1) comprend une couche (30) adaptée pour absorber la lumière infrarouge, la couche (30) s'étendant sur la surface avant (22) de la fenêtre (20) de manière à faire face au moins en partie au séparateur (13), **caractérisé en ce que**
- ledit système d'éclairage et d'imagerie est adapté pour être placé à l'intérieur d'un véhicule automobile ; et
- ledit couvercle (1) comprend en outre un revêtement infrarouge (40) adapté pour absorber la lumière visible et transmettre la lumière infrarouge, le revêtement infrarouge (40) s'étendant devant la surface avant (22) de la fenêtre (20) de manière à faire face à la source de lumière infrarouge (6).

2. Système d'éclairage et d'imagerie (2) selon la revendication 1, dans lequel ladite couche (30) a une absorption supérieure à 90 % dans une gamme de longueurs d'onde allant de 700 nm à 2000 nm.

3. Système d'éclairage et d'imagerie (2) selon la revendication 1 ou 2, dans lequel ladite couche (30) s'étend de manière à faire face à au moins 50 % d'une surface du séparateur (13) qui est en contact avec la fenêtre (20).

4. Système d'éclairage et d'imagerie (2) selon l'une des revendications 1 à 3, dans lequel ladite couche (30) a une épaisseur comprise entre 15 µm et 1200 µm.

5. Système d'éclairage et d'imagerie (2) selon l'une des revendications 1 à 4, dans lequel ladite couche (30) s'étend de telle sorte que tout rayon de lumière émis par la source de lumière infrarouge (6) et guidé par la fenêtre (20) vers l'appareil de capture d'images (3) se reflète au moins une fois sur une interface entre la fenêtre (20) et la couche (30).

6. Système d'éclairage et d'imagerie (2) selon l'une des revendications 1 à 5, comprenant en outre un film transparent tourné vers la face avant de la fenêtre (20).

7. Système d'éclairage et d'imagerie (2) selon l'une des revendications 1 à 6, dans lequel le séparateur (13) a une dimension le long d'une direction allant de la source de lumière infrarouge (6) à l'appareil de capture d'images (3), ladite dimension du séparateur (13) étant supérieure à l'épaisseur de la fenêtre (20).

8. Système d'éclairage et d'imagerie (2) selon l'une des revendications 1 à 6, dans lequel le séparateur (13) et la fenêtre (20) peuvent être obtenus par un procédé de moulage par injection multimatériaux.
